# EUROPEAN PATENT APPLICATION

(11) **EP 3 477 751 A1**
(43) Date of publication of application: **01.05.2019**
(21) Application number: 17815666.7
(22) Date of filing: 19.06.2017
(51) Int. Cl.: H01M 8/04014, H01M 8/04007, H01M 8/04089, H01M 8/0612, H01M 8/124

(54) **FUEL CELL SYSTEM COMPRISING HEAT EXCHANGER USING ANODE GAS OR ANODE EXHAUST GAS**

(30) Priority: 23.06.2016 KR 20160078428
(71) Applicant: Kyungdong Navien Co., Ltd., Pyeongtaek-si, Gyeonggi-do 17704 (KR)
(72) Inventor: SON, Seung Kil, Seoul 08501 (KR); SHIN, Seock Jae, Seoul 08501 (KR); PARK, Se Jin, Seoul 08501 (KR); YI, Yong, Seoul 08501 (KR); KIM, Jin Hyung, Seoul 08501 (KR)
(74) Representative: Brann AB
(86) International application number: PCT/KR2017/006377
(87) International publication number: WO 2017/222253

(57) **Abstract**

The present disclosure provides a fuel cell system in which fuel or air supplied to a burner is preheated using an anode gas having a high temperature discharged from a heat exchange type reformer or an anode off-gas having a high temperature discharged from a fuel cell stack, thus enhancing operation efficiency of the burner. The fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted oxygen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner air supply line supplying air to the burner from the outside of the hot box, and preheating air supplied to the burner through the burner air supply line using the high-temperature anode gas discharged from the heat exchange type reformer.

## Description

### FIELD

The present disclosure relates to a fuel cell system including a heat exchanger using an anode gas or an anode off-gas, and more particularly, to a fuel cell system including a heat exchanger using an anode gas or an anode off-gas, in which air or fuel supplied to a burner is preheated using an anode gas or an anode off-gas.

### BACKGROUND

Generally, most of the energy used by humans comes from fossil fuels. However, the use of fossil fuels has serious adverse effects on the environment such as air pollution, acid rain, global warming, and the like, and has low energy efficiency.

Recently, fuel cell stems have been developed to solve the problems associated with the use of fossil fuels. Unlike conventional secondary batteries, fuel cells have a structure in which a hydrogen gas or hydrocarbon as a fuel is supplied to a negative electrode and oxygen is supplied to a positive electrode to generate electricity. That is, the fuel cell may be considered as a power generating device that actually generates electricity although the name is a battery. Basically, a fuel cell uses a method of causing hydrogen and oxygen to electrochemically react each other and converting a difference in energy before and after the reaction into electrical energy, instead of burning fuel.

A fuel cell may be a clean power generation system which has 80% or more thermal efficiency of adding electricity generation amount and heat recovery amount and which does not generate a gas polluting the environment such as NOx, SOx, and the like, and is free of noise and vibration.

A solid oxide fuel cell system generally includes a fuel cell stack producing electricity through a chemical reaction, a fuel treating device supplying hydrogen/hydrocarbon and oxygen to the stack, an inverter device converting the DC power produced in the fuel cell stack to AC power, an arrangement recovery device recovering heat generated in the fuel cell stack, and the like.

The fuel treating device includes a heat exchange type reformer generating hydrogen from fuel such as natural gas, a burner supplying a heat source necessary for the fuel cell stack and the heat exchange type reformer, a heat exchanger preheating fuel or air supplied to the fuel cell stack, and the like. Here, the heat exchange type reformer, the fuel cell stack, the burner, and the heat exchanger, which operate at high temperatures, are installed in a single heat-insulated hot box.

The burner supplies a heat source for operating a fuel cell, and the amount of heat supplied to the system varies according to temperature conditions of fuel and air supplied to the burner. Since a difference between the amount of heat supplied by the burner and the amount of heat required for the system represents system efficiency, the amount of heat discharged to the outside of the hot box must be collected (recovered) as much as possible. To this end, in the fuel cell system, a heat exchanger is additionally provided in the hot box to re-use much heat as possible before being discharged to the outside of the hot box.

A typical example thereof is disclosed in Korean Patent Laid-Open Publication No. 2010-0083027 (entitled: Solid Oxide Fuel Cell System) (Patent document 1). The solid oxide fuel cell system includes a reformer that receives a liquid hydrocarbon-based raw material and generates a hydrogen-rich reformed gas; a heater attached to an outer wall of the reformer to raise a temperature of the reformer to an initial ignition temperature; a desulfurizer which receives a reformed gas discharged from the reformer and removes a sulfur component to generate a fuel gas; a complex heat exchanger raising temperatures of air and the fuel gas discharged from the desulfurizer; a solid oxide fuel cell stack generating electricity upon receiving the fuel gas raised in temperature from the complex heat exchanger by an anode gas inlet and receiving the air raised in temperature from the complex heat exchanger by a cathode gas inlet; and a catalytic combustor receiving a discharge gas of a cathode and an anode discharged from the solid oxide fuel cell stack and burning the received discharge gas to generate a combustion flue gas, wherein the complex heat exchanger performs heat-exchange on the combustion flue gas, the fuel gas, and air, and the solid oxide fuel cell stack, the reformer, the heater, the desulfurizer, and the catalytic combustor are provided in a single hot box.

That is, the high-temperature combustion flue gas discharged from the catalytic combustor serving as a burner is heat-exchanged with the fuel gas and air supplied to the fuel cell stack in the complex heat exchanger to preheat the same, thus enhancing efficiency of the fuel cell system.

However, the heat exchanger provided in the related art fuel cell system as in Patent document 1 is mainly used only for preheating the fuel gas or air supplied to the fuel cell stack and the gas having a high temperature is still discharged to the outside as is.

In order to solve the problem, it is necessary to develop a fuel cell system having a new arrangement type in which a heat exchanger is installed at an optimal position to maximally recycle a heat source in the hot box.

### SUMMARY

The present disclosure has been developed to meet the needs of the industry, and an aspect of the present disclosure provides a fuel cell system in which fuel or air supplied to a burner is preheated using an anode gas having a high temperature discharged from a heat exchange type reformer or an anode off-gas having a high temperature discharged from a fuel cell stack, thus enhancing operation efficiency of the burner.

According to an embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner air supply line supplying air to the burner from the outside of the hot box, and preheating air supplied to the burner through the burner air supply line using the high-temperature anode gas discharged from the heat exchange type reformer.

According to another embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner fuel gas supply line supplying a fuel gas to the burner from the outside of the hot box, and preheating the fuel gas supplied to the burner through the burner fuel gas supply line using the high-temperature anode gas discharged from the heat exchange type reformer.

According to another embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner anode off-gas (AOG) supply line supplying an AOG to the burner from the outside of the hot box, and preheating the AOG supplied to the burner through the burner AOG supply line using the high-temperature anode gas discharged from the heat exchange type reformer.

According to another embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at the burner air supply line supplying air to the burner from the outside of the hot box, and preheating air supplied to the burner through the burner air supply line using the high-temperature AOG discharged from the fuel cell stack.

According to another embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner fuel gas supply line supplying a fuel gas to the burner from the outside of the hot box, and preheating the fuel gas supplied to the burner through the burner fuel gas supply line using the high-temperature AOG discharged from the fuel cell stack.

According to another embodiment of the present disclosure, a fuel cell system including a heat exchanger using an anode gas or an anode off-gas includes: a hot box formed of a heat insulating material; a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode; a heat exchange type reformer disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a heat exchanger disposed in the hot box, installed at a burner AOG supply line supplying an AOG to the burner from the outside of the hot box, and preheating the AOG supplied to the burner through the burner AOG supply line using the high-temperature AOG discharged from the fuel cell stack.

According to the fuel cell system including a heat exchanger using an anode gas or an anode off-gas (AOG) of the present disclosure configured as described above, the amount of heat of air or a fuel gas supplied to the burner may be increased through heat-exchange between the high-temperature anode gas or anode off-gas (AOG) generated in the hot box of the fuel cell system and air or the fuel gas supplied to the burner installed in the hot box from the outside of the hot box, whereby heat efficiency of the overall fuel cell system may be enhanced.

Also, the amount of heat of air or the fuel gas supplied to the burner may be controlled through heat exchange between a high-temperature anode gas and a low-temperature air or fuel gas, and a temperature of the anode gas may be adjusted to a temperature suitable for a low-temperature type fuel cell stack.

In addition, by increasing the amount of heat of air supplied to the burner, a supply amount of a fuel gas burned therewith may be reduced, reducing cost for an operation.

### BRIEF DESCRIPTION OF THE DRAWINGS

FIG. 1 is a configuration diagram of a fuel cell system illustrating embodiment 1-1 including a heat exchanger using an anode gas according to the present disclosure.
FIG. 2 is a configuration diagram of a fuel cell system illustrating embodiment 1-2 including a heat exchanger using an anode gas according to the present disclosure.
FIG. 3 is a configuration diagram of a fuel cell system illustrating embodiment 2-1 including a heat exchanger using an anode gas according to the present disclosure.
FIG. 4 is a configuration diagram of a fuel cell system illustrating embodiment 2-2 including a heat exchanger using an anode gas according to the present disclosure.
FIG. 5 is a configuration diagram of a fuel cell system illustrating embodiment 3-1 including a heat exchanger using an anode gas according to the present disclosure.
FIG. 6 is a configuration diagram of a fuel cell system illustrating embodiment 3-2 including a heat exchanger using an anode gas according to the present disclosure.
FIG. 7 is a configuration diagram of a fuel cell system illustrating embodiment 1-1 including a heat exchanger using an anode off-gas according to the present disclosure.
FIG. 8 is a configuration diagram of a fuel cell system illustrating embodiment 1-2 including a heat exchanger using an anode off-gas according to the present disclosure.
FIG. 9 is a configuration diagram of a fuel cell system illustrating embodiment 2-1 including a heat exchanger using an anode off-gas according to the present disclosure.
FIG. 10 is a configuration diagram of a fuel cell system illustrating embodiment 2-2 including a heat exchanger using an anode off-gas according to the present disclosure.
FIG. 11 is a configuration diagram of a fuel cell system illustrating embodiment 3-1 including a heat exchanger using an anode off-gas according to the present disclosure.
FIG. 12 is a configuration diagram of a fuel cell system illustrating embodiment 3-2 including a heat exchanger using an anode off-gas according to the present disclosure.

### DETAILED DESCRIPTION

Hereinafter, a fuel cell including a heat exchange unit for temperature control according to the present disclosure will be described in detail with reference to the accompanying drawings.

The present disclosure may, however, be embodied in different forms and should not be construed as being limited to the embodiments set forth herein. Rather, these embodiments are provided so that this disclosure will be thorough and complete and will fully convey the scope of the present disclosure to those skilled in the art, and the present disclosure is only defined by the scopes of claims. For reference, in describing the present disclosure, if a detailed description of known functions or components associated with the present disclosure unnecessarily obscures the gist of the present disclosure, the detailed description will be omitted.

A fuel cell system including a heat exchanger using an anode gas or an anode off-gas according to the present disclosure basically uses a solid oxide fuel cell (SOFC) system. Thus, various embodiments according to the present disclosure will be described in detail on the basis of the SOFC system. However, the technical concept of the present disclosure is not limited thereto and may be applicable to various types of high temperature fuel cell systems using a burner and a heat exchanger.

A chemical reaction in which oxygen and hydrogen are combined to generate water is an exothermic reaction, and thus, the SOFC system is generally operated at a high temperature of 500°C or higher. Accordingly, in the entire fuel cell system, various devices and pipes that operate in a high temperature state are disposed in a hot box formed of a heat insulating material to prevent heat from being discharged to the outside.

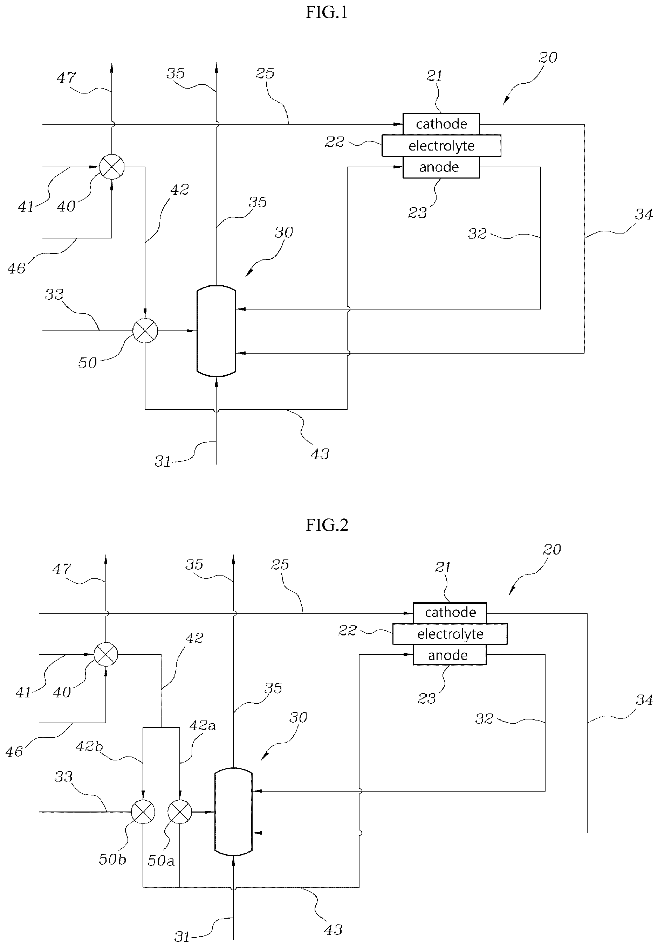

Prior to a detailed description of the present disclosure, devices and pipes installed in the hot box will be briefly described with reference to FIG. 1. Here, the hot box refers to a box including a fuel cell stack 20, a burner 30, and various heat exchange devices, and the like, mounted therein, operated in a high temperature state, and is heat-insulated against the outside.

First, the fuel cell stack 20, which is a core device for producing electricity, is disposed inside the hot box. The fuel cell stack 20 is formed by stacking unit cells including a cathode 21, an electrolyte 22, and an anode 23 in layers.

The cathode 21 is connected to an air supply line 25 for stack (or stack air supply line 25) for supplying air (oxygen) from the outside of the hot box, and air necessary for a chemical reaction is supplied through the stack air supply line 25. In order to increase reaction efficiency, a separate heat exchanger (not shown) may be installed in the stack air supply line 25 to increase the amount of heat of the supplied air. The electrolyte 22 is formed of a solid oxide having high ion conductivity such as a zirconia type, and oxygen ions supplied through the cathode 21 move through the electrolyte 22 to react with hydrogen. The anode 23 is supplied with a fuel gas (hydrogen) from the outside of the hot box. The fuel gas may be a general city gas, a propane gas, or the like. In order to increase reaction efficiency in the stack, the fuel gas may be reformed to highly efficient hydrogen gas and supplied.

Meanwhile, a burner 30, which generates a burner off-gas having a high temperature (or a high temperature burner off-gas) upon receiving a fuel gas and air and supplies the burner off-gas as a heat source in the fuel cell system, is installed in the hot box. The burner 30 is supplied with the fuel gas and fuel required for combustion through two paths.

First, in order to supply a fuel gas to the burner 30, a fuel gas supply line 31 for burner (or burner fuel gas supply line 31) and an anode off-gas (AOG) supply line 32 for burner (or burner AOG supply line 32) are installed in the burner 30. A normal-temperature fuel gas such as general city gas, a propane gas, and the like, is supplied from the outside of the hot box through the burner fuel gas supply line 31. Through the burner AOG supply line 32, an anode off-gas (AOG), which is discharged from the anode 23 of the fuel cell stack 20 and includes a non-reacted hydrogen gas, is supplied. The AOG, which has a high temperature of 700°C or higher immediately after it is discharged from the fuel cell stack 20, is subjected to several heat exchange steps so as to be supplied to the burner 30 generally at a temperature of 70°C.

In order to supply air to the burner 30, an air supply line 33 for burner (or a burner air supply line 33) and a cathode off-gas (COG) supply line 34 for burner (or a burner COG supply line 34) are connected to the burner 30. Air at room temperature is supplied from the outside of the hot box through the burner air supply line 33. A high-temperature cathode off-gas (COG) which is discharged from the cathode 21 of the fuel cell stack 20 and includes non-reacted air, is supplied through the burner COG supply line 34. The COG, which has a high temperature of about 650°C to 700°C immediately after being discharged from the fuel cell stack 20, is directly supplied to the burner 30.

Meanwhile, a heat exchange type reformer 40, which generates an anode gas reformed to a highly efficient hydrogen gas (reformed gas) upon receiving a fuel gas such as the general city gas or a propane gas from the outside of the hot box and supplies the anode gas (reformed gas) to the anode 23 of the fuel cell stack 20, is installed inside the hot box.

To this end, a fuel gas supply line 41 for heat exchange type reformer (or heat exchange type reformer fuel gas supply line 41) which supplies a fuel gas from the outside of the hot box, is connected to the heat exchange type reformer 40, and the anode gas generated through the heat exchange type reformer 40 is supplied to the anode 23 of the fuel cell stack 20. In order to supply a high heat source required for reforming to the heat exchange type reformer 40, a high-temperature heat exchange medium is supplied to the heat exchange type reformer 40 through a separate high- temperature heat exchange gas supply line 46, and the high-temperature heat exchange medium, while passing through the heat exchange type reformer 40, is heat-exchanged with the fuel gas supplied through the heat exchange type reformer fuel gas supply line 41 and subsequently discharged to the outside of the hot box through a reformer passage gas discharge line 47. This is the same in FIGS. 2 to 12 described hereinafter.

As described above, the burner 30 is supplied with the fuel gas or air through two paths. That is, the burner 30 is supplied with the fuel gas containing hydrogen through the burner fuel gas supply line 31 and the burner AOG supply line 32 and is supplied with air containing hydrogen through the burner air supply line 33 and the burner COG supply line 34. If a temperature of the fuel gas or air supplied to the burner 30 is high, a burner off-gas having the amount of heat as much may be generated, and thus, higher temperature of the fuel gas or air supplied to the burner 30 is advantageous.

However, the fuel gas supplied through the burner fuel gas supply line 31, as a general city gas or propane gas, is in a normal temperature state and the air supplied through the burner air supply line 33 is also in a room temperature state.

The anode off-gas supplied through the burner AOG supply line 32 has a high temperature immediately after being discharged from the anode 23 of the fuel cell stack 20 but drops in temperature, while passing through the heat-exchange device disposed outside the hot box, to have a temperature of about 70°C at the time when it is supplied to the burner 30 through the burner AOG supply line 32.

However, the COG supplied through the burner COG supply line 34 is supplied to the burner 30, while maintaining the same high temperature as that when it was discharged from the fuel cell stack 20 as is.

As described above, since the difference in the amount of heat used inside the hot box with respect to a total amount of heat supplied from the burner 30 disposed in the hot box determines efficiency of the overall system, it is necessary to recover the amount of heat discharged from the hot box to the outside as much as possible. The inventors of the present application optimized overall heat efficiency of the fuel cell system by installing a heat exchanger 50 for heat-exchanging the high-temperature anode gas or the AOG at three locations excluding the burner COG supply line 34 to which high-temperature air is supplied, i.e., at the burner fuel gas supply line 31, the burner AOG supply line 32, and the burner air supply line 33, on the basis of results obtained by analyzing a temperature distribution of the fuel gas or air supplied to the burner 30.

FIGS. 1 to 6 illustrate an embodiment in which a heat exchanger using an anode gas is installed.

According to an embodiment illustrated in FIGS. 1 and 2, the heat exchanger 50 is disposed in the hot box, installed at the burner air supply line 33 supplying air to the burner 30 from the outside of the hot box, and is configured to preheat room-temperature air supplied to the burner 30 through the burner air supply line 33 using a high-temperature anode gas.

The high-temperature anode gas, which is generated as fuel gas supplied through the heat exchange type reformer fuel gas supply line 41 is heat-exchanged with the heat exchange medium in the heat exchange type reformer 40, includes a large amount of highly efficient hydrogen gas. The anode gas is supplied in a high temperature state to the fuel cell stack 20 in order to enhance heat efficiency of the fuel cell stack 20. In the present embodiment, before being supplied to the fuel cell stack 20, the high-temperature anode gas is relayed to pass through the heat exchanger 50 so as to be used for preheating low-temperature air supplied to the burner 30, thus enhancing overall efficiency of the fuel cell system.

The present embodiment may be more advantageously used when the low-temperature type fuel cell stack 20 is used. In the case of using the related art low-temperature type fuel cell stack is used, the high-temperature anode gas discharged to the heat exchange type reformer 40 may not be used as is but may be used after being dropped by a predetermined temperature. To this end, the temperature of the discharged anode gas is lowered by controlling a heat exchange process of the heat exchange type reformer 40 or the temperature of the discharged anode gas is lowered using a separate cooling unit, and thereafter, the temperature-lowered anode gas is supplied to the low-temperature type fuel cell stack 20.

In contrast, in the present embodiment, even when the low-temperature type fuel cell stack 20 is used, the high-temperature anode gas is discharged from the heat exchange type reformer 40 as is and the amount of heat is subsequently used to preheat the low-temperature air supplied to the burner 30, thus further enhancing heat efficiency of the stack.

To this end, an anode gas relay line 42 supplying a high-temperature anode gas to the heat exchanger 50 is connected to the heat exchange type reformer 40, and an anode gas circulation line 43 heat-exchanging the high-temperature anode gas with ambient air supplied to the heat exchanger 50 and subsequently supplying the heat-exchanged anode gas to the anode 23 of the stack 50 is connected to the heat exchanger 50. Reference numeral 35 denotes a burner off-gas discharge line along which a burner off-gas is discharged to the outside of the hot box.

An embodiment of FIG. 2 is basically the same as the embodiment of FIG. 1 in that the high-temperature anode gas discharged from the heat exchange type reformer 40 is supplied to the heat exchanger 50 installed at the burner air supply line 33 to preheat room-temperature air supplied from the outside of the hot box to the burner 30. However, compared with the embodiment of FIG. 1 in which only one heat exchanger 50 is installed, the embodiment of FIG. 2 is different in that two heat exchangers, i.e., a first heat exchanger 50a and a second heat exchanger 50b, are installed and the high-temperature anode gas is supplied through each of an anode gas first branch line 42a and an anode gas second branch line 42b.

In the heat exchanger, heat exchange takes place between the high-temperature anode gas and the room-temperature ambient air. However, due to a relatively high passage rate of the fluid, heat exchange may not sufficiently take place. This embodiment solves the problem by performing heat exchange twice. Although two heat exchangers 50a and 50b are illustrated in FIG. 2, the present disclosure is not limited thereto and three or more heat exchangers may also be installed.

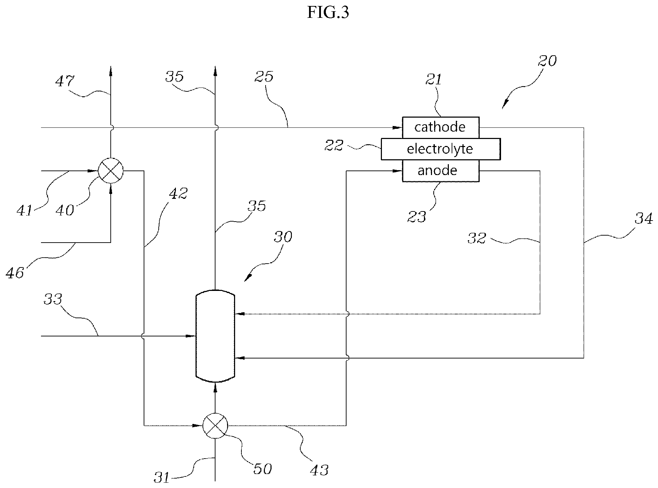

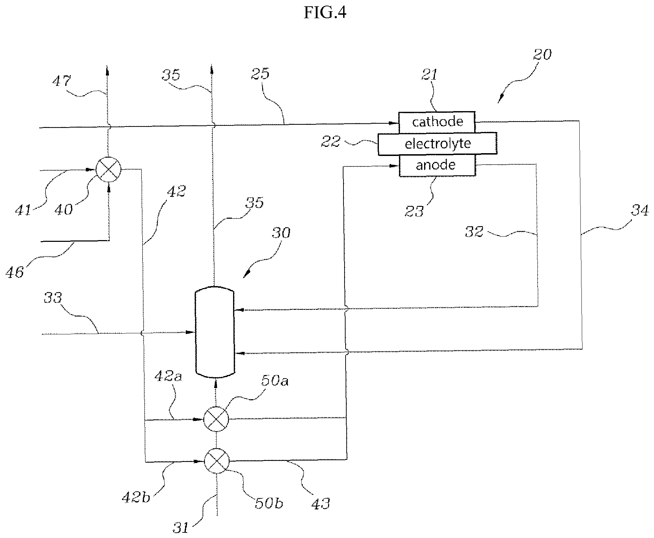

According to another embodiment disclosed in FIGS. 3 and 4, the heat exchanger 50 is disposed in the hot box, is installed at the burner fuel gas supply line 31 supplying a fuel gas to the burner 30 from the outside of the hot box, and is configured to preheat a room-temperature fuel gas supplied to the burner 30 through the burner fuel gas supply line 31 using the high-temperature anode gas.

The high-temperature anode gas, which is generated as the fuel gas supplied through the heat exchange type reformer fuel gas supply line 41 is heat-exchanged with the heat exchange medium in the heat exchange type reformer 40, includes a large amount of highly efficient hydrogen gas. Here, the high-temperature anode gas may also be supplied without a reforming reaction according to conditions of the stack. The anode gas is supplied to the fuel cell stack 20, in a high temperature state, to enhance heat efficiency of the fuel cell stack 20. In this embodiment, before being supplied to the fuel cell stack 20, the high-temperature anode gas is relayed to pass through the heat exchanger 50 so as to be used to preheat the low-temperature fuel gas supplied to the burner 30, thus enhancing overall efficiency of the fuel cell system.

The present embodiment may be more advantageously used when the low-temperature type fuel cell stack 20 is used. In the case of using the related art low-temperature type fuel cell stack is used, the high-temperature anode gas discharged to the heat exchange type reformer 40 may not be used as is but may be used after being dropped by a predetermined temperature. To this end, the temperature of the discharged anode gas is lowered by controlling a heat exchange process of the heat exchange type reformer 40 or the temperature of the discharged anode gas is lowered using a separate cooling unit, and thereafter, the temperature-lowered anode gas is supplied to the low-temperature type fuel cell stack 20.

In contrast, in the present embodiment, even when the low-temperature type fuel cell stack 20 is used, the high-temperature anode gas is discharged from the heat exchange type reformer 40 as is and the amount of heat is subsequently used to preheat the low-temperature fuel gas supplied to the burner 30, thus further enhancing heat efficiency of the stack.

To this end, an anode gas relay line 42 supplying a high-temperature anode gas to the heat exchanger 50 is connected to the heat exchange type reformer 40, and an anode gas circulation line 43 heat-exchanging the high-temperature anode gas with the fuel gas supplied to the heat exchanger 50 and subsequently supplying the heat-exchanged anode gas to the anode 23 of the stack 50 is connected to the heat exchanger 50. Reference numeral 35 denotes a burner off-gas discharge line along which a burner off-gas is discharged to the outside of the hot box.

An embodiment of FIG. 4 is basically the same as the embodiment of FIG. 3 in that the high-temperature anode gas discharged from the heat exchange type reformer 40 is supplied to the heat exchanger 50 installed at the burner fuel gas supply line 31 to preheat the room-temperature fuel gas supplied from the outside of the hot box to the burner 30. However, compared with the embodiment of FIG. 3 in which only one heat exchanger 50 is installed, the embodiment of FIG. 4 is different in that two heat exchangers, i.e., the first heat exchanger 50a and the second heat exchanger 50b, are installed and the high-temperature anode gas is supplied through each of the anode gas first branch line 42a and the anode gas second branch line 42b.

In the heat exchanger, heat exchange takes place between the high-temperature anode gas and the room-temperature fuel gas. However, due to a relatively high passage rate of the fluid, heat exchange may not sufficiently take place. This embodiment solves the problem by performing heat exchange twice. Although two heat exchangers 50a and 50b are illustrated in FIG. 4, the present disclosure is not limited thereto and three or more heat exchangers may also be installed.

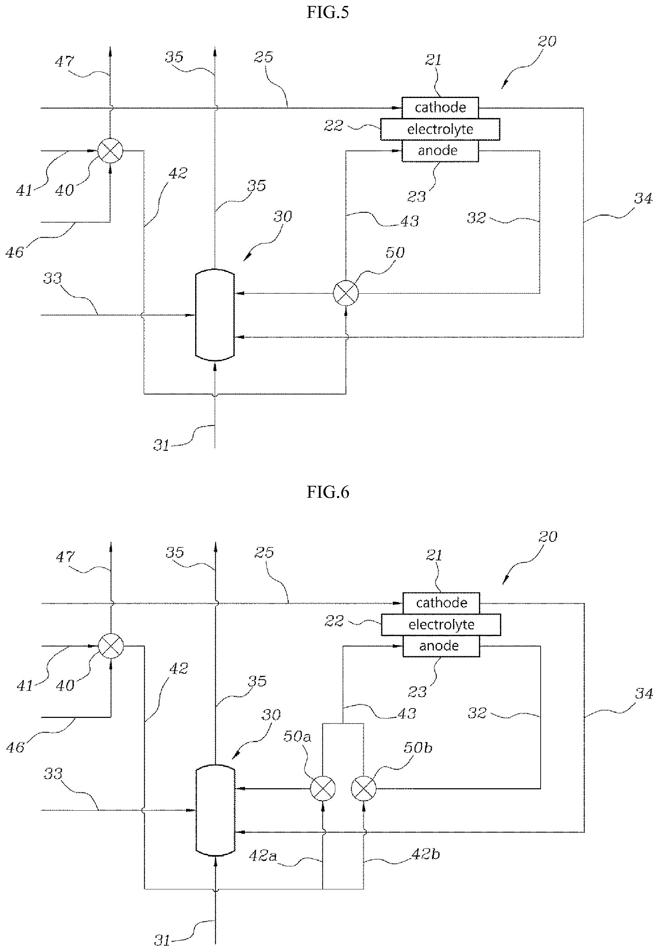

According to another embodiment disclosed in FIGS. 5 and 6, the heat exchanger 50 is disposed in the hot box, is installed at the burner AOG supply line 32 supplying an AOG to the burner 30 from the outside of the hot box, and is configured to preheat a low-temperature AOG supplied to the burner 30 through the burner AOG supply line 32 using the high-temperature anode gas. The anode exhaust gas has a high temperature of 700°C or higher immediately after being discharged from the fuel cell stack 20, but it is lowered to about 70°C, while undergoing the heat-exchange process several times inside or outside the hot box, and supplied in the temperature-lowered state to the burner 30 as described above.

The high-temperature anode gas, which is generated as the fuel gas supplied through the heat exchange type reformer fuel gas supply line 41 is heat-exchanged with the heat exchange medium in the heat exchange type reformer 40, includes a large amount of highly efficient hydrogen gas. The anode gas is supplied to the fuel cell stack 20, in a high temperature state, to enhance heat efficiency of the fuel cell stack 20. In this embodiment, before being supplied to the fuel cell stack 20, the high-temperature anode gas is relayed to pass through the heat exchanger 50 so as to be used to preheat the low-temperature AOG supplied to the burner 30, thus enhancing overall efficiency of the fuel cell system.

The present embodiment may be more advantageously used when the low-temperature type fuel cell stack 20 is used. In the case of using the related art low-temperature type fuel cell stack is used, the high-temperature anode gas discharged to the heat exchange type reformer 40 may not be used as is but may be used after being dropped by a predetermined temperature. To this end, the temperature of the discharged anode gas is lowered by controlling a heat exchange process of the heat exchange type reformer 40 or the temperature of the discharged anode gas is lowered using a separate cooling unit, and thereafter, the temperature-lowered anode gas is supplied to the low-temperature type fuel cell stack 20.

In contrast, in the present embodiment, even when the low-temperature type fuel cell stack 20 is used, the high-temperature anode gas is discharged from the heat exchange type reformer 40 as is and the amount of heat is subsequently used to preheat the low-temperature AOG supplied to the burner 30, thus further enhancing heat efficiency of the stack.

To this end, an anode gas relay line 42 supplying a high-temperature anode gas to the heat exchanger 50 is connected to the heat exchange type reformer 40, and an anode gas circulation line 43 heat-exchanging the high-temperature anode gas with the AOG supplied to the heat exchanger 50 and subsequently supplying the heat-exchanged anode gas to the anode 23 of the stack 50 is connected to the heat exchanger 50. Reference numeral 35 denotes a burner off-gas discharge line along which a burner off-gas is discharged to the outside of the hot box.

An embodiment of FIG. 6 is basically the same as the embodiment of FIG. 5 in that the high-temperature anode gas discharged from the heat exchange type reformer 40 is supplied to the heat exchanger 50 installed at the burner AOG supply line 32 to preheat the low-temperature AOG supplied from the outside of the hot box to the burner 30. However, compared with the embodiment of FIG. 5 in which only one heat exchanger 50 is installed, the embodiment of FIG. 6 is different in that two heat exchangers, i.e., the first heat exchanger 50a and the second heat exchanger 50b, are installed and the high-temperature anode gas is supplied through each of the anode gas first branch line 42a and the anode gas second branch line 42b.

In the heat exchanger, heat exchange takes place between the high-temperature anode gas and the low-temperature AOG. However, due to a relatively high passage rate of the fluid, heat exchange may not sufficiently take place. This embodiment solves the problem by performing heat exchange twice. Although two heat exchangers 50a and 50b are illustrated in FIG. 6, the present disclosure is not limited thereto and three or more heat exchangers may also be installed.

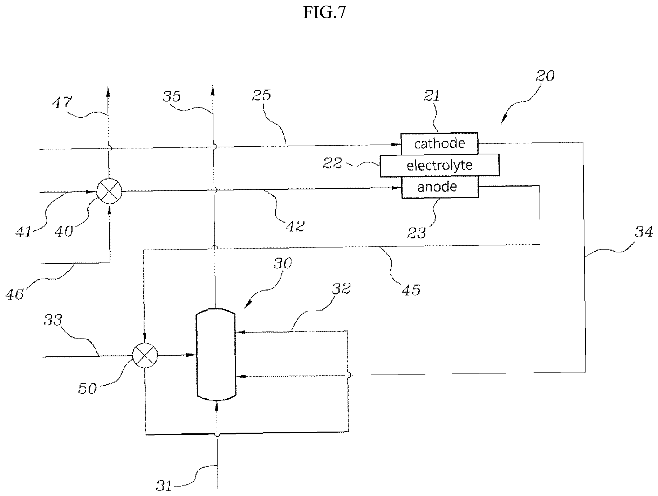

Hereinafter, an embodiment in which a heat exchanger using an anode off-gas (AOG) is installed will be described with reference to FIGS. 7 to 12.

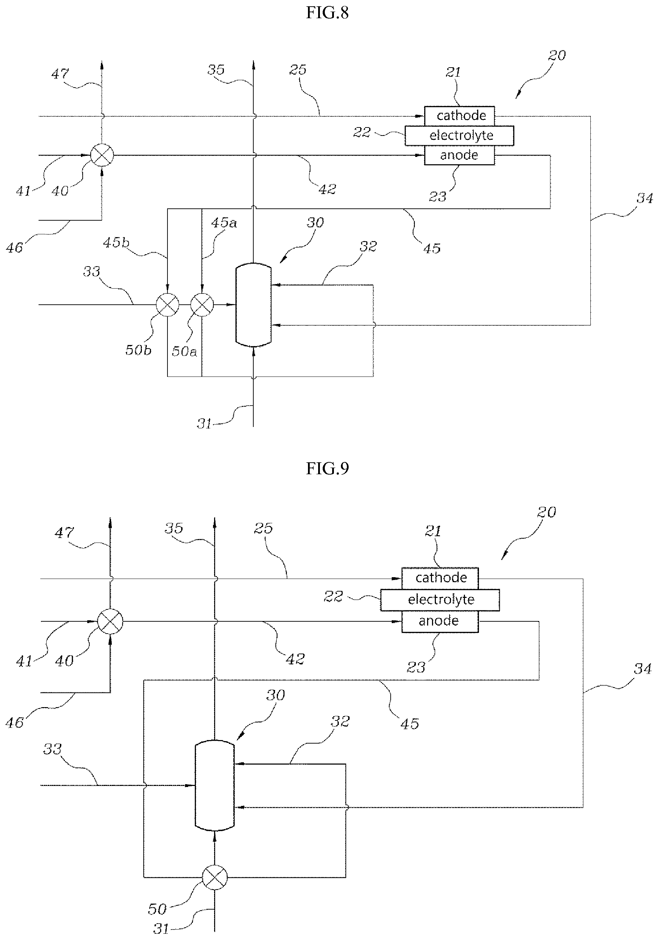

According to another embodiment disclosed in FIGS. 7 and 8, the heat exchanger 50 is disposed in the hot box, is installed at the burner air supply line 33 supplying air to the burner 30 from the outside of the hot box, and is configured to preheat room-temperature air supplied to the burner 30 through the burner air supply line 33 using the high-temperature AOG.

The high-temperature AOG, in a state of including a non-reacted hydrogen gas after a chemical reaction of generating water by combining hydrogen and oxygen in the fuel cell stack 20, is discharged from the anode 23. Since the chemical reaction made in the fuel cell stack 20 is an exothermic reaction, the fuel cell stack 20 is generally operated at a high temperature of 700°C or higher, and thus, the AOG discharged from the anode 23 has a high temperature of 700°C or higher.

Since the AOG includes the non-reacted hydrogen gas, as well as having the amount of heat at a high temperature, the amount of heat and the non-reacted hydrogen gas are configured to be recycled in the fuel cell system. More specifically, in order to use the high heat amount of the AOG, heat exchange is performed several times inside or outside the hot box. A typical example is a process of heat exchange with hot water that takes place in a heat storage tank (not shown) installed outside the hot box. This hot water is used as hot water for heating water in a household, bath, and the like. In order to use the non-reacted hydrogen gas contained in the AOG, the AOG discharged to the outside of the hot box is supplied again to the burner 30 via the burner AOG supply line 32 and burned.

The fuel cell system is a very useful power generation facility in that it produces electricity and heat at the same time. The generated electricity is consumed in the household, and surplus power, if any, may be transmitted to the outside via an electrical system, and electricity charge may be reduced as much. However, the produced heat may be temporarily stored in a heat storage medium such as a heat storage tank (hot water tank), but if it is not used within a predetermined time, the heat may be dissipated and cannot be used. That is, since the surplus heat has an effective value lower than that of the surplus power, it is important to strictly predict usage of electricity and heat in the household not to produce surplus heat in terms of energy efficiency.

Therefore, it may be important to discharge the high-temperature to the outside of the hot box and use it to produce heat through the heat storage tank, but it may be more desirable to effectively use the amount of heat thereof inside the hot box 20 to enhance efficiency of the fuel cell stack 20 to thus contribute electricity production. In consideration of this, the inventors of the present application devised that the high-temperature AOG preheats low-temperature air supplied to the burner 30 before it is discharged to the outside off the hot box to contribute to electricity production, thus improving heat efficiency inside the hot box.

To this end, an AOG relay line 45 supplying an AOG to the heat exchanger 50 is connected to the fuel cell stack 20, and the burner AOG supply line 32 heat-exchanging the AOG with air supplied to the heat exchanger 50 and subsequently supplying the heat-exchanged AOG to the burner 30 is connected to the heat exchanger 50. Reference numeral 35 denotes a burner off-gas discharge line along which a burner off-gas is discharged to the outside of the hot box.

An embodiment of FIG. 8 is basically the same as the embodiment of FIG. 7 in that the high-temperature AOG discharged from the fuel cell stack 20 is supplied to the heat exchanger 50 installed at the burner air supply line 33 to preheat the room-temperature air supplied from the outside of the hot box to the burner 30. However, compared with the embodiment of FIG. 7 in which only one heat exchanger 50 is installed, the embodiment of FIG. 8 is different in that two heat exchangers, i.e., the first heat exchanger 50a and the second heat exchanger 50b, are installed and the high-temperature AOG is supplied through each of an AOG first branch line 45a and an AOG second branch line 45b.

In the heat exchanger, heat exchange takes place between the high-temperature AOG and the room-temperature ambient air. However, due to a relatively high passage rate of the fluid, heat exchange may not sufficiently take place. This embodiment solves the problem by performing heat exchange twice. Although two heat exchangers 50a and 50b are illustrated in FIG. 8, the present disclosure is not limited thereto and three or more heat exchangers may also be installed.

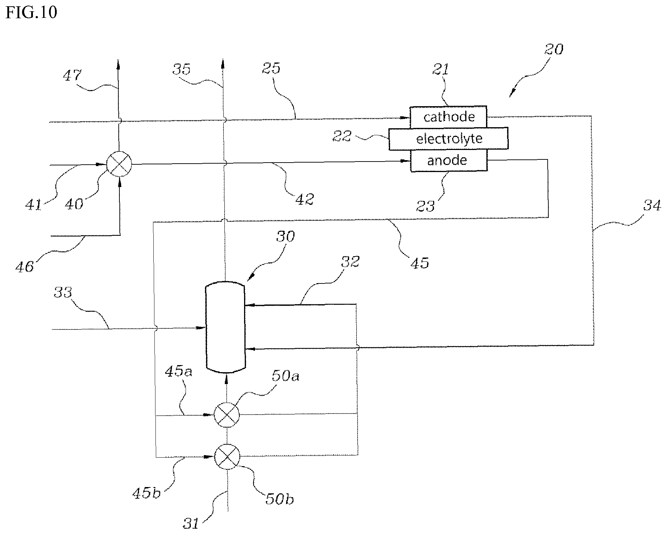

According to another embodiment disclosed in FIGS. 9 and 10, the heat exchanger 50 is disposed in the hot box, is installed at the burner fuel gas supply line 31 supplying the fuel gas to the burner 30 from the outside of the hot box, and is configured to preheat the room-temperature fuel gas supplied to the burner 30 through the burner fuel gas supply line 31 using the high-temperature AOG.

The fact that the AOG is discharged at a high temperature of 700°C or higher from the anode 23 due to an exothermic reaction that takes place in the fuel cell stack 20, the fact that the high-temperature AOG, before being discharged to the outside of the hot box and used to produce heat, is preferably used to preheat the low-temperature fluid supplied to the burner 20 present inside the hot box, thus contributing to electricity production, and the like, have been described above in detail with reference to FIGS. 7 and 8, and thus, a detailed description thereof will be omitted.

To this end, an AOG relay line 45 supplying an AOG to the heat exchanger 50 is connected to the fuel cell stack 20, and the burner AOG supply line 32 heat-exchanging the AOG with the fuel gas supplied to the heat exchanger 50 and subsequently supplying the heat-exchanged AOG to the BURNER 30 is connected to the heat exchanger 50. Reference numeral 35 denotes a burner off-gas discharge line along which a burner off-gas is discharged to the outside of the hot box.

An embodiment of FIG. 10 is basically the same as the embodiment of FIG. 9 in that the high-temperature AOG discharged from the fuel cell stack 20 is supplied to the heat exchanger 50 installed at the burner air supply line 33 to preheat the room-temperature fuel gas supplied from the outside of the hot box to the burner 30. However, compared with the embodiment of FIG. 9 in which only one heat exchanger 50 is installed, the embodiment of FIG. 10 is different in that two heat exchangers, i.e., the first heat exchanger 50a and the second heat exchanger 50b, are installed and the high-temperature AOG is supplied through each of the AOG first branch line 45a and the AOG second branch line 45b.

In the heat exchanger, heat exchange takes place between the high-temperature AOG and the room-temperature fuel gas. However, due to a relatively high passage rate of the fluid, heat exchange may not sufficiently take place. This embodiment solves the problem by performing heat exchange twice. Although two heat exchangers 50a and 50b are illustrated in FIG. 10, the present disclosure is not limited thereto and three or more heat exchangers may also be installed.

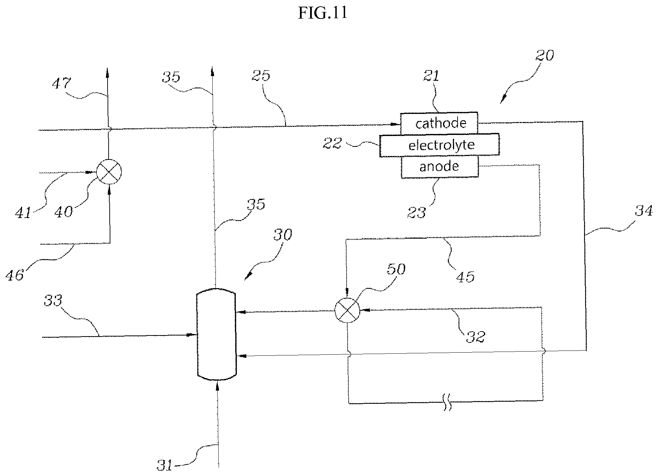

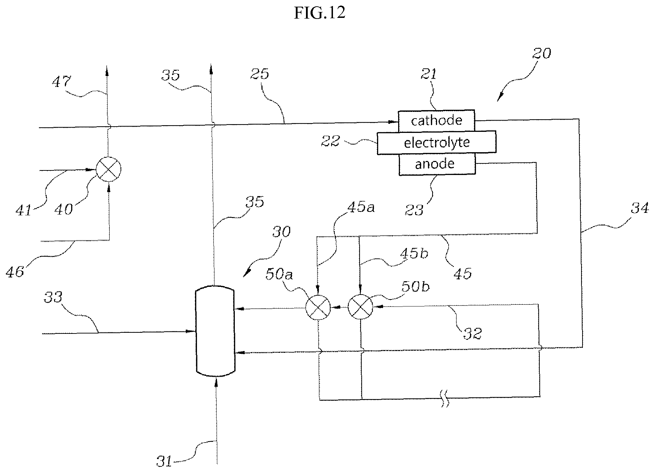

According to another embodiment disclosed in FIGS. 11 and 12, the heat exchanger 50 is disposed in the hot box, is installed at the burner AOG supply line 32 supplying the AOG to the burner 30 from the outside of the hot box, and is configured to preheat the low-temperature AOG supplied to the burner 30 through the burner AOG supply line 32 using the high-temperature AOG.

The fact that the AOG is discharged at a high temperature of 700°C or higher from the anode 23 due to an exothermic reaction that takes place in the fuel cell stack 20, the fact that the high-temperature AOG, before being discharged to the outside of the hot box and used to produce heat, is preferably used to preheat the low-temperature fluid supplied to the burner 20 present inside the hot box, thus contributing to electricity production, and the like, have been described above in detail with reference to FIGS. 7 and 8, and thus, a detailed description thereof will be omitted.

As described above, the AOG discharged from the fuel cell stack 20 maintains the high temperature state in the hot box, but, after the AOG is discharged to the outside of the hot box, the temperature of the AOG is lowered in the process of passing through the heat storage tank (not shown) or a condenser (not shown) for moisture removal, and when the AOG is re-supplied to the inside of the hot box through the burner AOG supply line 32, the AOG has a low temperature of about 70 °C .

Based upon such recognition, in this embodiment, the low-temperature AOG re-supplied to the inside of the hot box after having been discharged to the outside of the hot box is preheated using the high-temperature AOG which has been discharged from the fuel cell stack but is not discharged yet to the outside of the hot box, thus further enhancing heat efficiency in the hot box.

To this end, an AOG relay line 45 supplying an AOG to the heat exchanger 50 is connected to the fuel cell stack 20, and the burner AOG supply line 32 heat-exchanging the AOG with the fuel gas supplied to the heat exchanger 50 and subsequently supplying the heat-exchanged AOG to the BURNER 30 is connected to the heat exchanger 50. Reference numeral 35 denotes a burner off-gas discharge line along which a burner off-gas is discharged to the outside of the hot box.

An embodiment of FIG. 12 is basically the same as the embodiment of FIG. 11 in that the high-temperature AOG discharged from the fuel cell stack 20 is supplied to the heat exchanger 50 installed at the burner AOG supply line 32 to preheat the low-temperature AOG supplied from the outside of the hot box to the burner 30. However, compared with the embodiment of FIG. 11 in which only one heat exchanger 50 is installed, the embodiment of FIG. 12 is different in that two heat exchangers, i.e., the first heat exchanger 50a and the second heat exchanger 50b, are installed and the high-temperature AOG is supplied through each of the AOG first branch line 45a and the AOG second branch line 45b.

In the heat exchanger, heat exchange takes place between the high-temperature AOG and the low-temperature AOG. However, due to a relatively high passage rate of the fluid, heat exchange may not sufficiently take place. This embodiment solves the problem by performing heat exchange twice. Although two heat exchangers 50a and 50b are illustrated in FIG. 12, the present disclosure is not limited thereto and three or more heat exchangers may also be installed.

Lastly, referring to preheating the fluid supplied to the burner 30 using the AOG supplied through the AOG relay line 45, preheating ambient air supplied through the burner air supply line 33 as illustrated in FIG. 7 and preheating the fuel gas supplied through the burner fuel gas supply line 31 as illustrated in FIG. 9 or preheating the AOG supplied through the burner AOG supply line 32 as illustrated in FIG. 11 may be different in heat exchange efficiency due to a difference in flow rate between the supply lines. Based on this, utilization of the AOG finally discharged to the outside of the hot box may be designed to be different. In general, a supply flow rate of the burner air supply line 33 is the largest, a supply flow rate of the AOG relay line 45 and the burner AOG supply line 32 is the second largest, and a supply flow rate of the burner fuel gas supply line 31 is relatively the smallest. Here, a difference between the supply flow rate of the burner air supply line 33 and the supply flow rate of the AOG relay line 45 is much greater than a difference between the supply flow rate of the AOG relay line 45 and the supply flow rate of the burner fuel gas supply line 31.

Heat exchange sufficiently takes place between the AOG and the fuel gas which are not significantly different in supply flow rate, so a temperature of the finally discharged heat exchanger passage gas is low. As a result, efficiency of heat exchange in the heat storage tank at a follow-up stage is relatively reduced. Meanwhile, heat exchange does not sufficiently take place between the AOG and ambient air which are significantly different in supply flow rate, so the temperature of the finally discharged heat exchanger passage gas is high. As a result, efficiency of heat exchange in the heat storage tank at the follow-up stage is relatively increased. Since the fuel cell system is a system capable of simultaneously generating electricity and heat, whether to preheat air or whether to preheat the fuel gas (or AOG) may be selected among the various embodiments of the present disclosure in consideration of efficiency of heat recovery at the heat storage tank.

Although the embodiments of the present disclosure have been described with reference to the accompanying drawings, it will be apparent to a person skilled in the art to which the invention pertains that various changes in forms may be made without departing from the spirit or essential features of the present disclosure. Therefore, the foregoing specific embodiments are intended to be illustrative in all aspects rather than limiting. The scope of the present disclosure shall be defined by the appended claims rather than the foregoing description and it should be interpreted that the present disclosure shall extend to all modifications or changes derived from the definition, ranges, and equivalents of the claims.

## Claims

1. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at a burner air supply line supplying air to the burner from the outside of the hot box, and preheating air supplied to the burner through the burner air supply line using the high-temperature anode gas discharged from the heat exchange type reformer.

2. The fuel cell system of claim 1, wherein
an anode gas relay line supplying the anode gas to the heat exchanger is connected to the heat exchange type reformer, and
an anode gas circulation line heat-exchanging the anode gas with ambient air supplied to the inside of the heat exchanger and subsequently supplying the heat-exchanged anode gas to the anode of the fuel cell stack is connected to the heat exchanger.

3. The fuel cell system of claim 1 or 2, wherein
one heat exchanger or two or more heat exchangers are installed at the burner air supply line.

4. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at a burner fuel gas supply line supplying a fuel gas to the burner from the outside of the hot box, and preheating the fuel gas supplied to the burner through the burner fuel gas supply line using the high-temperature anode gas discharged from the heat exchange type reformer.

5. The fuel cell system of claim 4, wherein
an anode gas relay line supplying the anode gas to the heat exchanger is connected to the heat exchange type reformer, and
an anode gas circulation line heat-exchanging the anode gas with the fuel gas supplied to the inside of the heat exchanger and subsequently supplying the heat-exchanged anode gas to the anode of the fuel cell stack is connected to the heat exchanger.

6. The fuel cell system of claim 4 or 5, wherein
one heat exchanger or two or more heat exchangers are installed at the burner fuel gas supply line.

7. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at a burner anode off-gas (AOG) supply line supplying an AOG to the burner from the outside of the hot box, and preheating the AOG supplied to the burner through the burner AOG supply line using the high-temperature anode gas discharged from the heat exchange type reformer.

8. The fuel cell system of claim 7, wherein
an anode gas relay line supplying the anode gas to the heat exchanger is connected to the heat exchange type reformer, and
an anode gas circulation line heat-exchanging the anode gas with an anode off-gas (AOG) supplied to the inside of the heat exchanger and subsequently supplying the heat-exchanged anode gas to the anode of the fuel cell stack is connected to the heat exchanger.

9. The fuel cell system of claim 7 or 8, wherein
one heat exchanger or two or more heat exchangers are installed at the burner AOG supply line.

10. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at the burner air supply line supplying air to the burner from the outside of the hot box, and preheating air supplied to the burner through the burner air supply line using the high-temperature AOG discharged from the fuel cell stack.

11. The fuel cell system of claim 10, wherein
an AOG relay line supplying the AOG to the heat exchanger is connected to the fuel cell stack, and
a burner AOG supply line heat-exchanging the AOG with air supplied to the inside of the heat exchanger and subsequently supplying the heat-exchanged AOG to the burner is connected to the heat exchanger.

12. The fuel cell system of claim 10 or 11, wherein
one heat exchanger or two or more heat exchangers are installed at the burner air supply line.

13. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at a burner fuel gas supply line supplying a fuel gas to the burner from the outside of the hot box, and preheating the fuel gas supplied to the burner through the burner fuel gas supply line using the high-temperature AOG discharged from the fuel cell stack.

14. The fuel cell system of claim 13, wherein
an AOG relay line supplying the AOG to the heat exchanger is connected to the fuel cell stack, and
a burner AOG supply line heat-exchanging the AOG with the fuel gas supplied to the inside of the heat exchanger and subsequently supplying the heat-exchanged AOG to the burner is connected to the heat exchanger.

15. The fuel cell system of claim 13 or 14, wherein
one heat exchanger or two or more heat exchangers are installed at the burner fuel gas supply line.

16. A fuel cell system including a heat exchanger using an anode gas or an anode off-gas, the fuel cell system comprising:
a hot box formed of a heat insulating material;
a fuel cell stack disposed in the hot box, including a cathode, an electrolyte, and an anode, allowing oxygen supplied to the cathode and hydrogen supplied to the anode to be combined to cause a chemical reaction to produce electricity, causing a high-temperature cathode off-gas (COG) including non-reacted oxygen to be discharged from the cathode, and causing a high-temperature anode off-gas (AOG) including non-reacted hydrogen to be discharged from the anode;
a heat exchange type reformer disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a heat exchanger disposed in the hot box, installed at a burner AOG supply line supplying an AOG to the burner from the outside of the hot box, and preheating the AOG supplied to the burner through the burner AOG supply line using the high-temperature AOG discharged from the fuel cell stack.

17. The fuel cell system of claim 16, wherein
an AOG relay line supplying the AOG to the heat exchanger is connected to the fuel cell stack, and
a burner AOG supply line heat-exchanging the AOG with the fuel gas supplied to the inside of the heat exchanger and subsequently supplying the heat-exchanged AOG to the burner is connected to the heat exchanger.

18. The fuel cell system of claim 16 or 17, wherein
one heat exchanger or two or more heat exchangers are installed at the burner AOG supply line.
